(19) Europäisches Patentamt
European Patent Office
Office européen des brevets

(11) EP 0 864 551 A2

(12) **EUROPÄISCHE PATENTANMELDUNG**

(43) Veröffentlichungstag:
**16.09.1998 Patentblatt 1998/38**

(51) Int. Cl.[6]: **C04B 41/88**, F16D 69/02

(21) Anmeldenummer: **98103903.5**

(22) Anmeldetag: **05.03.1998**

(84) Benannte Vertragsstaaten:
**AT BE CH DE DK ES FI FR GB GR IE IT LI LU MC NL PT SE**
Benannte Erstreckungsstaaten:
**AL LT LV MK RO SI**

(30) Priorität: **14.03.1997 DE 19710671**

(71) Anmelder:
**Daimler-Benz Aktiengesellschaft**
**70567 Stuttgart (DE)**

(72) Erfinder:
- **Haug, Tilmann, Dr.**
  **88690 Uhldingen-Mühlheim (DE)**
- **Rauscher, Steffen**
  **89073 Ulm (DE)**
- **Scheydecker, Michael**
  **89278 Nersingen (DE)**

(54) **Verfahren zum Herstellen eines Bauteiles, das einen Keramik-Metall-Verbundwerkstoff enthält, und damit hergestelltes Bauteil**

(57) Die Erfindung betrifft ein Verfahren zur Herstellung eines Bauteils, welches bereichsweise aus einem Keramik-Metall-Verbundwerkstoff hergestellt ist sowie das Bauteil selbst. Zur Herstellung des Bauteils wird ein aus keramischen Vorprodukten hergestellter poröser Opferkörper bei einer vorgebbaren und bei oder oberhalb der Erweichungstemperatur eines befüllenden Metalls liegenden Befüllungstemparatur und unter erhöhtem Druck mit erweichtem mit erweichtem Metall und/oder einer metallischen Legierung, befüllt, der befüllte Opferkörper auf eine gegenüber der Befüllungstemparatur höhere Reaktionstemperatur oder darüber erhitzt, wobei zwischen dem befüllenden Metall (BMe) und dem Metall der Keramik des Opferkörpers (KMe) eine Reaktion durchgeführt wird, bei der der Keramik-Metall-Verbundwerkstoff mit einer keramischen und einer metallischen Phase gebildet wird, wobei die keramische Phase $KMe_mB_x$ und/oder $KMe_nC_y$ und/oder $KMe_oCN$ und $BMe_pO_3$ aufweist und wobei die metallische Phase eine intermetallische Verbindung aus einem Metall der Keramik (KMe) und einem befüllenden Metall (BMe) aufweist. Für eine günstige Herstellung des Bauteils sieht die Erfindung vor, daß der Opferkörper in ein Druckgußwerkzeug lagedefiniert und bezüglich des Druckgußwerkzeugs ortsfest sowie die Druckgußform bis auf vom Opferkörper freie Zwischenbereiche ausfüllend eingelegt wird, daß bei dem Druckguß des Bauteils der Opferkörper mit dem befüllenden Metall (BMe) befüllt wird, daß mit dem Druckgußwerkzeug eine zumindest endnahe Form des Bauteils, bestehend aus befülltem Opferkörper und dem/den vom Opferkörper freien Zwischenelemente(n) - gegossen wird und daß das fertig gegossene Bauteil im Bereich des Opferkörpers auf oder über Reaktionstemperatur erhitzt wird.

Figur 2

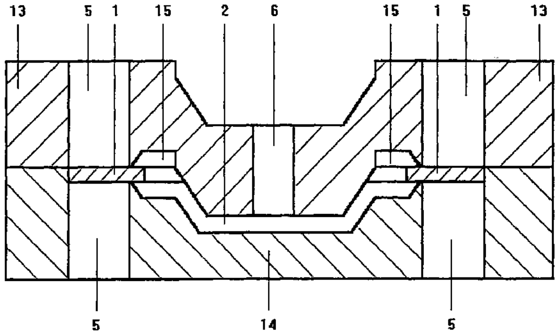


EP 0 864 551 A2

## Beschreibung

Die Erfindung betrifft ein Verfahren zum Herstellen eines Bauteiles gemäß dem Oberbegriff des Anspruchs 1 und ein Bauteil, das zumindest bereichsweise einen Keramik-Metall-Verbundwerkstoff aufweist gemäß dem Oberbegriff des Anspruchs wie beides aus der gattungsbildend zugrundegelegten DE-P ... als bekannt hervorgeht.

Aus der nicht vorveröffentlichten DE-P ist ein Verfahren zur Herstellung eines Bauteils aus einem Keramik-Metall-Verbundwerkstoff bekannt, bei dem ein Opferkörper aus keramischen Vorprodukten mit thermisch erweichtem Metall - insbesondere Aluminium - und/oder mit einer metallischen Legierungen befüllt wird. Die Befüllungstemperatur ist unterhalb einer Reaktionstemperatur angeordnet, bei welcher Reaktionstemperatur eine Austauschreaktion zwischen einem Metall der keramischen Vorprodukte und einem Metall des befüllenden Metalls stattfindet. Nach dem möglichst vollständigen Befüllen des Opferkörpers wird der befüllte Opferkörper auf die Reaktionstemperatur oder darüber erhitzt, wodurch dann die eben angesprochene Reaktion stattfindet. Bei dieser Reaktion wird ein Bauteil aus dem Keramik-Metall-Verbundwerkstoff hergestellt, das eine keramische und eine metallische Phase mit einer intermetallischen Verbindung des Metalls der Keramik und des Metalls des Befüllenden Metalls aufweist.

Durch die Befüllung des Opferkörpers mit einem durch Erhitzen erweichten Metall unterhalb einer Reaktionstemperatur des Metalls mit dem Material des Opferkörpers wird die keramische Matrix während der Befüllung und auch bei der sich anschließenden Reaktion zwischen dem eingebrachten Metall und dem Material des Opferkörpers erhalten. Idealerweise erfolgt die Befüllung der Poren des Opferkörpers vollständig, so daß bei stöchiometrische Bemessung der Infrage kommenden Substanzen der Bauteil vollständig sowie riß- und kanalfrei durchreagiert ist.

In bevorzugter Weise ist hierbei das befüllende Metall Aluminium und das Metall der Keramik Titan, so daß nach der bevorzugten Austauschreaktion der keramische Phase $TiB_x$ und/oder $TiC_y$ und/oder TiCN und $Al_2O_3$ aufweist, wobei die intermetallische Verbindung der metallischen Phase das hochtemperaturbeständige TiAl ist.

Die Materialeigenschaften dieses Keramik-Metall-Verbundwerkstoffes sind gut. So weist bspw. ein Keramik-Metall-Verbundwerkstoff, der mit Aluminium als befüllendes Metall (BMe) und Ti als Metall des keramischen Opferkörpers (KMe) hergestellt wird, eine Dichte von 3,4 g/cm$^3$ auf, wobei diese Dichte geringfügig höher liegt als die der sogenannten MMCs (<u>m</u>etal-<u>m</u>atrix-<u>c</u>omposits), jedoch nur 42 % der Dichte von vergleichbaren Gußeisen beträgt. Insbesondere in der bevorzugten Ausbildung, bei der die hochtemperaturbeständigen Verbindung in Form der intermetallischen Verbindung TiAl reicht das Anwendungsgebiet des Bauteils bis mindestens 800 °C, wobei die Werte für Grauguß deutlich überboten werden.

Aus dem hergestellten Keramik-Metall-Verbundwerkstoff werden insbesondere Reibringe für die Reibflächen von Scheibenbremsen gefertigt. Diese Reibringe werden anschließen über mechanische Verbindungtechniken wie Verschraubungen usw. am Topf der Bremsscheibe befestigt.

Die Aufgabe der Erfindung ist es, das gattungsgemäß zugrundegelegten Verfahren dahingehend weiterzuentwikkeln, daß die Herstellung von Bauteilen, die einen vorbekannten Kermaik-Metall-Verbundwerkstoff aufweisen, einfacher, schneller und insbesondere billiger herzustellen sind.

Die Aufgabe wird bei einer gattungsgemäßen durch die kennzeichnenden Merkmale des Anspruchs 1 bzw. gelöst. Durch das gleichzeitig mit dem Befüllen des Opferkörpers stattfindende Druckgießen des gesamten Bauteils - also der Bereich des Opferkörpers und die vom Opferkörper freien Zwischenelemente - in dem gleichen Druckgußwerkzeug kann auf das bislang stattfindende nachträgliche mechanische Verbinden der einzelnen Bereiche des Bauteiles verzichtet werden.

Zweckmäßige Ausgestaltungen der Erfindung sind den Unteransprüchen entnehmbar. Im übrigen wird die Erfindung anhand von in den Figuren dargestellten Ausführungsbeispielen erläutert. Dabei zeigt

Fig. 1 eine Preßform für den Opferkörper mit eingebrachtem Pulver,

Fig. 2 ein Druckgußwerkzeug mit eingelegtem Opferkörper,

Fig. 3 ein gegossenes Bauteil mit teilgefülltem Opferkörper und Induktionsheizung und

Fig. 4 ein Druckgußwerkzeug mit zwei eingelegten Opferkörpern.

Bevor auf die Figuren 1 bis 4 eingegangen wird, wird nachfolgend die prinzipielle Herstellung eines Bauteiles anhand einer Bremsscheibe für Kraftfahrzeuge beschrieben.

Zuerst wird ein Opferkörper 1 hergestellt, wobei hierzu in zweckmäßiger Weise $TiO_2$ mit einem oder mehreren Bor (B) und/oder Kohlenstoff aufweisenden Ausgangsstoff, insbesondere mit boridischen und/oder carbidischen Keramiken zu einem Gemenge vermischt wird. Das Gemenge wird auf eine Austauschtemperatur zwischen 900 °C und 1900 °C, bevorzugt zwischen 1100 °C und 1400 °C, und unterhalb einer zu einer autokatalytischen Reaktion, insbesondere einer Explosion führenden Temperatur, erhitzt und geglüht, wobei bei der Austauschtemperatur eine Austauschreaktion zwischen einem Ausgangsstoff und dem $TiO_2$ mit den Reaktionsprodukten $TiB_x$ und/oder $TiC_y$ durchgeführt wird, wobei gilt:

$$0 \leq x \leq 2 \text{ und } 0 \leq y \leq 1.$$

Aus den Reaktionsprodukten wird dann der formstabile und poröse Opferkörper 1 insbesondere durch Pressen hergestellt.

Bei dieser Herstellung des Opferkörpers 1 liegt ein wichtiger Vorteil einer weiterführenden Ausgestaltung des erfindungsgemäßen Verfahrens, da hier durch den Verzicht auf das sehr teure TiC als Ausgangsmaterial für den Opferkörper 1 ein niedriges Kostenniveau sowohl der Rohstoffe als auch der Prozeßtechnik vorliegt. So besitzt die Erfindung bspw. bei der Herstellung einer Bremsscheibe das Potential, daß bei einer Großserienfertigung der Stückpreis derartiger Bremsscheiben in der Nähe von Gußscheiben liegen könnte.

Im folgenden wird genauer auf die Herstellung des Opferkörpers 1 eingegangen.

Die reaktiven Ausgangsstoffe werden in Pulverform in einem Glaskolben grob gemischt, wobei die Ausgangsstoffe insbesondere in den vorher berechneten stöchiometrischen Verhältnissen abgewogen werden. Zweckmäßigerweise das Gemenge auch mit einem Kohlenstoff- und/oder Sauerstoffüberschuß angesetzt werden. Mit dem Kohlenstoffüberschuß ist eine bessere Umsetzung des $TiO_2$ verbunden wogegen der Sauerstoffüberschuß eine gute Oxidation des Aluminiums zu $Al_2O_3$ bewirkt.

Anschließend wird ein in Azeton gelöster Binder (Polypropylencarbonat) zu der Pulvermischung hinzugegeben. Dieser Schlicker wird in einem Rotationsverdampfer gründlich gemischt und gleichzeitig getrocknet. Das getrocknete Material besteht aus großen, harten Agglomeraten, die wiederum in einer Zentrifugalmühle zerkleinert werden müssen.

Das hierdurch erhaltene Gemenge wird in einer runden Preßform uniaxial zu einem porösen Grünkörper verpreßt (Formdurchmesser 60 mm, 100 mm, 330 mm).

Nach dem Pressen wird der eine Keramikmatrix aufweisende ungetemperte Grünkörper einer Glühbehandlung bei einer Austauschtemperatur zur Herstellung des keramischen und porösen Opferkörpers 1 unterzogen.

Hierbei kann die Glühbehandlung und das Pressen miteinander vertauscht sein. So kann auch zuerst die Glühbehandlung bei der Austauschtemperatur für das Gemenge durchgeführt werden und anschließend aus dem getemperten bzw. geglühten Gemenge der keramische und poröse Opferkörper 1 gepreßt und ggf. gesintert werden.

Auch können in an sich bekannter Weise dem Gemenge vor der Pressung zu dem Grünkörper bzw. Opferkörper 1 Fasern und/oder ein Filz und/oder ein Gewebe - im folgenden zusammenfassend Fasern genannt - beigegeben und mit dem Gemenge vermischt werden. Günstig sind bspw. Kurzfasern mit einer Länge kleiner 15 mm und größer 3 mm . Vorzugsweise sind die Fasern auf der Basis von $Al_2O_3$ und/ SiC und/oder Metall, insbesondere Stahl, und/oder Mineralien hergestellt.

Die Austauschtemperatur liegt zwischen 900 °C und 1900 °C, bevorzugt in einem Bereich zwischen 1100 °C und 1400 °C, aber immer unterhalb einer Temperatur, die zu einer autokatalytischen Temperatur, insbesondere zu einer Explosion führt und mit einem Temperaturprogramm, das in seinen Rampen und Haltezeiten den Reaktionsmechanismen gerecht wird. Als Heizung wird üblicherweise ein graphitbeheizter Kaltwandreaktor unter Vakuum verwendet.

Die so gewonnenen porösen und keramischen Opferkörper 1 werden anschließend in eine Druckgußform eines Druckgußwerkzeuges lagedefiniert und bzgl. der Druckgußform auch ortsfest eingelegt.

Danach wird das Druckgußwerkzeug geschlossen und die Druckgußform zum Formen der gesamten Bremsscheibe ausgegossen. Beim Ausgießen der Druckgußform wird der Opferkörper 1 mit einem Metall und/oder einer das Metall aufweisenden Legierung befüllt und gleichzeitig die verbleibenden Zwischenbereiche 2, die keinen Opferkörper 1 aufweisen, unter Ausbildung des Topfes (Zwischenelement 3) ausgegossen.

In besonderer Weise sind die Bereiche des Opferkörpers 1 mit einem eigenen Materialzuführungskanal 5 versehen. Dadurch kann der Opferkörper 1 getrennt von denen verbleibenden Zwischenbereichen 2, die durch getrennt ansteuerbare Gußkanäle 6 vorsorgt werden können, befüllt werden. Durch diese konstruktive Ausgestaltung eines Druckgußwerkzeuges kann die Druckgußform z.B. im Bereich des Opferkörpers 1 mit einem anderen Druck beaufschlagt und/oder sogar auch mit einem anderen Material wie die verbleibenden Zwischenbereiche 2 befüllt werden.

Durch diese variierbaren Möglichkeiten kann ein herzustellendes Bauteil in günstiger Weise seinem jeweiligen Verwendungszweck angepaßt werden. So ist es bspw. möglich, in einem Arbeitsschritt den Opferkörper 1 mit einem ersten Metall niederschmelzenden Leichtmetall wie Aluminium zu befüllen und die Zwischenbereiche 3 mit einer hochtemperaturbeständigen und mit dem ersten Metall und/oder dem Verbundwerkstoff eine Verbindung eingehenden weiteren Substanz auszugießen.

Die Befüllung zumindest des Opferkörpers 1 erfolgt bei einer Befüllungstemperatur, die innerhalb eines Temperaturintervalls angeordnet ist, dessen obere Grenze einer Reaktionstemperatur entspricht, bei der das befüllende Metall (BMe), insbesondere Aluminium und/oder Magnesium, mit einem Metall (KMe) des Opferkörpers 1 reagiert und dessen untere Grenze durch den Erweichungspunkt bzw. die Erweichungstemperatur des befüllenden Metalls (BMe) festgelegt

ist. Insbesondere bei Aluminium als befüllendes Metall (BMe) liegt die Befüllungstemperatur unterhalb 1000 °C, insbesondere unterhalb 900 °C.

Nach dem Befüllen wird die Bremsscheibe im Bereich der Reibflächen 7 des späteren Reibrings auf oder oberhalb der Reaktionstemperatur erhitzt. Die Erhitzung erfolgt bezüglich der Bremsscheibe also selektiv. Sie kann induktiv oder durch Reibung erfolgen. Im ersten Fall wird ein Induktor 8 verwendet, während im zweiten Fall die Reibflächen der Bremsscheibe bspw. einem einer Bremsung ähnlichem Vorgang unterzogen werden, bei dem dem befüllten Opferkörper zumindest bereichsweise die nötige Energie, die für die Reaktion notwendig ist, zugeführt wird.

Damit insbesondere bei der Verwendung von Aluminium für den Topf (Zwischenelement 3) und als befüllendes Metall der metallische Bereich der gegossenen Bremsscheibe während der Erwärmung auf bzw. über Reaktionstemperatur nicht zu stark erwärmt wird, können der Topf bspw. durch daran angelegte und insbesondere formangepaßte Kühlkörper gekühlt werden, so daß die Erwärmung des Topfes unterhalb einer kritischen Temperatur bleibt. Die Kühlkörper können insbesondere in der Art von Wärmetauschern realisiert werden. Eine andere vorteilhafterweise und ebenso billige Möglichkeit ist es, die Kühlkörper innenseitig mit einem flüssigen oder gasförmigen Kühlmittel zu durchströmen.

Durch die induktive bzw. Reibungserhitzung des befüllten Opferkörpers 1 ist es möglich, daß der Wärmeeintrag nur an der Oberfläche bzw. im oberflächennahen Bereich stattfindet, so daß im Innern des Opferkörpers 1 ein Kern 4 stehenbleibt, dessen Material nicht reagiert ist.

Insbesondere kann die Phasenzusammensetzung des Reibringes quer zur Reibfläche derart eingestellt werden, daß der Anteil des reagierten Keramik-Metall-Verbundwerkstoffes stetig zur Mitte zwischen den beiden Reibflächen des Reibringes hin abnimmt. Dies kann soweit gehen, daß der Kern in der Mitte unreagiert bleibt und auch noch der Erwärmung auf Reaktionstemperatur immer noch Aluminium aufweist, was sich positiv auf die Schadenstoleranz und auch auf die Ableitung der beim Bremsen entstehenden Wärme auswirkt.

Desweiteren ist es sinnvoll, auch die Reibflächen mit einem Gradienten hinsichtlich der Phasenzusammensetzung zu versehen, so daß der Anteil des Keramik-Metall-Verbundwerkstoffes in Richtung um Topf hin abnimmt, wodurch der Wärmefluß zum Topf hin verbessert wird, da die Wärmeleitfähigkeit des Metalls (hier Aluminium) i.a. besser als die des Keramik-Metall-Verbundwerkstoffes ist.

Die Verfahrensschritte zur Herstellung der Bremsscheibe mit einem Reibring, welcher zumindest im Bereich der Reibflächen 7 einen Keramik-Metall-Verbundwerkstoff aufweist, sind zweckmäßiger Weise wie folgt:

- Die Ausgangsmaterialien für das Material des Opferkörpers 1 werden bevorzugt in Pulverform insbesondere abgewogen vorgelegt,
- ggf. werden zu den Ausgangsmaterialien Fasern zugegeben,
- zusätzlich wird ein Binder wird zugegeben und naß vermischt,
- anschließend wird getrocknet und danach zu dem Gemenge vermahlen (z.B. in einer Zentrifugalmühle),
- das Gemenge wird uniaxial gepreßt und zuvor bzw. nach dem Pressen zu dem Opferkörper 1 geglüht,
- anschließend wird der Opferkörper 1 in einer Druckgußform definiert und fixiert angeordnet,
- die Druckgußform und der Opferkörper 1 werden mit Metall befüllt,
- das gegossene Bauteil wird im Bereich des Opferkörpers 1 selektiv auf Reaktionstemperatur erhitzt, wobei ggf. Zwischenelemente 3 des Bauteils gekühlt werden,
- woran sich die Endbearbeitung anschließt.

Für die oben aufgeführte Herstellung des Keramik-Metall-Verbundwerkstoffes laufen - ausgehend von der zusätzlichen Herstellung des Materials des Opferkörpers 1 - u.a. zwei Reaktionen in voneinander getrennten Prozeßschritten ab. Beim ersten Schritt handelt es sich um eine fest-fest Reaktion (Austauschreaktion) und im zweiten Schritt um eine fest-flüssig Reaktion (Endreaktion). Beide Reaktionen entsprechen einer chemischen Redox-Reaktion. Hierbei reagiert eine keramische Verbindung mit einem Metall, wobei eine neue keramische Verbindung entsteht und ein anderes Metall frei wird. Im folgenden wird die Erfindung anhand von Aluminium als befüllendes Metall beschrieben. Die Erfindung ist allerdings nicht auf die nachfolgenden Beispiele beschränkt, sonder kann auch auf andere Metall/Keramiktypen angewendet werden, welche bspw. der US 5,214,011 entnehmbar sind.

Wie schon erwähnt, wird als exemplarisches Beispiel die Reaktion zwischen Aluminium und Titanoxid beschrieben, die wie folgt aussieht:

$$4\ Al + 3\ TiO_2 \rightarrow 3\ Ti + 2\ Al_2O_3.$$

Bevor hierbei auf die genauen Details der Reaktionsführung eingegangen wird, soll der Übersicht halber eine schematische Darstellung hiervon vorangestellt werden.

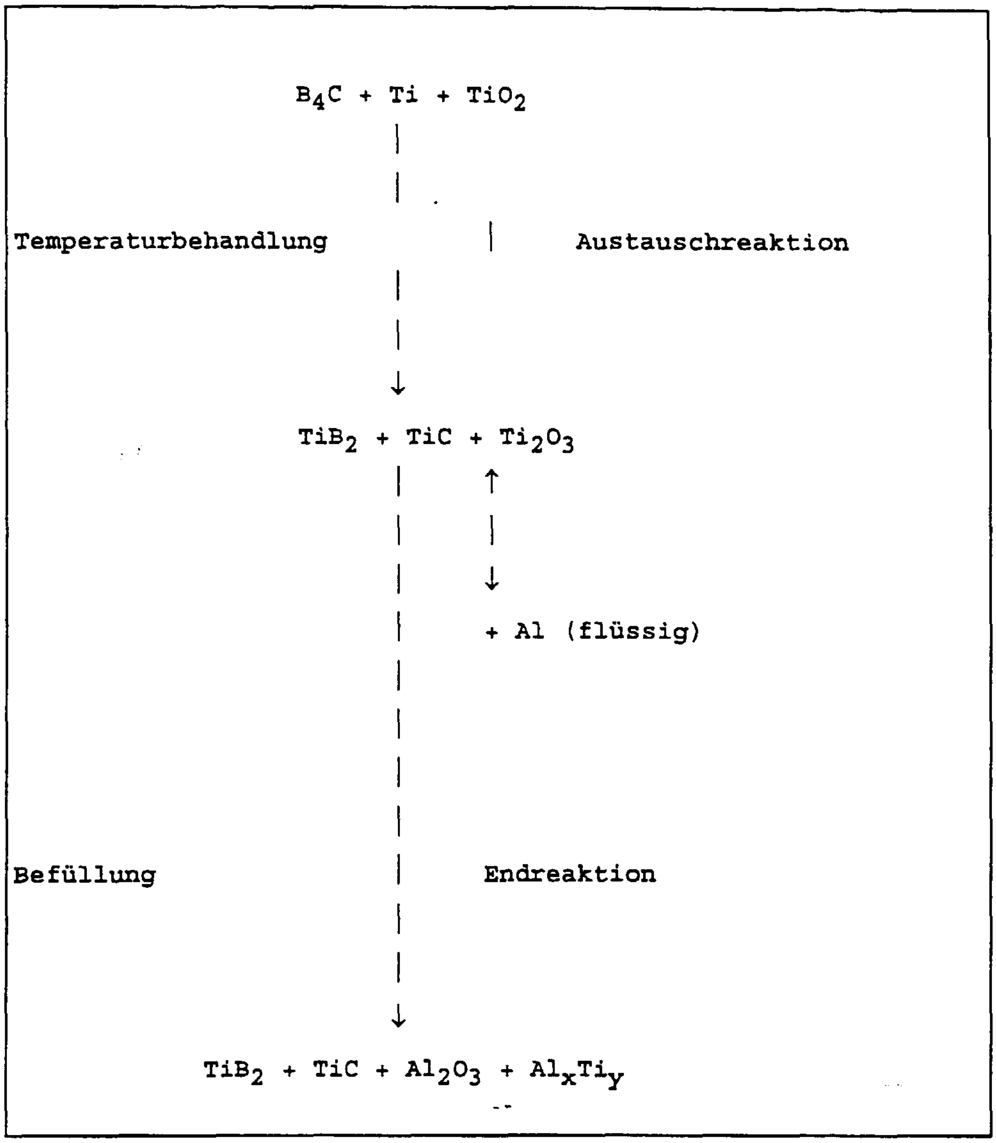


Der besondere Vorteil an diesem Beispiel besteht darin, daß ein niedrigschmelzendes, preisgünstiges Metall (Aluminium) mit einem hochschmelzenden, teuren Metall (Ti) umgesetzt wird. Ähnlich verhält es sich mit den auftretenden keramischen Bestandteilen, auch hier wird eine niederwertige Substanz in eine höherwertige Substanz umgewandelt.

a) Austauschreaktion:

Im ersten Reaktionsschritt handelt es sich um das oben beschriebene Glühen des Gemenges bzw. des Grünkörpers, wobei hier nur auf das Glühen des Grünkörpers eingegangen wird. Der gepreßte keramische Grünkörper, der aus einer stöchiometrischen Mischung von $B_4C$/3 Ti und 2 $TiO_2$ besteht, wird einer Temperaturbehandlung unterzogen, bei der im wesentlichen, folgende Reaktion stattfindet:

$$B_4C + 3\,Ti + 2\,TiO_2 \rightarrow 2\,TiB_2 + TiC + Ti_2O_3 + 0{,}5\,O_2$$

Es findet also eine Austauschreaktion zwischen $B_4C$ und Ti statt, die als Reaktionsprodukte $TiB_2$ und TiC liefert. Das $TiO_2$ wird zwar auf eine niedrigere Oxidationsstufe reduziert, beeinflußt aber nicht die vorher genannte Reaktion, weshalb sein Verhalten als quasiinert bezeichnet werden kann.

Die Austauschreaktion zwischen $B_4C$ und Ti wurde ausgewählt, da die Reaktionsprodukte $TiB_2$ und TiC gute Reib-

eigenschaften versprechen. Im Rahmen der vorliegenden Erfindung ist es gelungen, die Reaktion durch ein ausgefeiltes Temperaturprogramm kontrolliert ablaufen zu lassen.

In diesem Prozeßschritt ist es möglich, die Zusammensetzung und Eigenschaften des späteren Composites zu manipulieren. Bei der Austauschreaktion $B_4C/Ti$ tritt eine starke negative Volumenänderung auf. Das bedeutet, daß die Porosität, die der Preßkörper ohnehin schon besitzt, sich erheblich erhöht, sie liegt nach der Glühung der Matrix üblicherweise zwischen 40 % und 55 %. Dabei ist es von großer Bedeutung die Porosität in diesem Prozeßstadium präzise einzustellen, denn die Porosität bestimmt bei der späteren Befüllung des Opferkörpers 1 die zu reagierende Al(Metall)-Menge und somit die endgültige Phasenzusammensetzung.

Um eine bestimmte Porosität einzustellen, läßt sich zum einen die Zusammensetzung des Grünkörpers variieren, zum anderen kann man mit Hilfe eines geeigneten Temperaturprogrammes Einfluß auf die Reaktion nehmen.

Die Variierung der Zusammensetzung des Grünkörpers soll beispielhaft genauer beschrieben werden, denn hier besteht die Möglichkeit, die Produkte der Austauschreaktion $B_4C/Ti$, also $TiB_2$ und (oder) TiC von vornherein dem Grünkörper ganz oder teilweise zuzugeben. Die bisher verwendeten Ansätze sehen stöchiometrisch folgendermaßen aus:

0,5 $B_4C$/1,5 Ti/$TiB_2$/0,5 TiC/**2 $TiO_2$**
2 $TiB_2$/TiC/**2 $TiO_2$**
3 TiC / 0,7 N / 0,3 **2 $TiO_2$**

Nach dem ersten Reaktionsschritt hat der keramische Opferkörper 1 nahezu dieselbe Zusammensetzung, nur die Porosität ändert sich. Mit dieser Methode ist es möglich, die funktionellen keramischen Bestandteile genau vorzugeben und somit bestimmte Werkstoffeigenschaften, wie zum Beispiel den Reibwert, einzustellen.

b) Endreaktion:

Vor der Durchführung der Endreaktion wird der poröse und keramische Opferkörper 1 mit dem Aluminium befüllt. Zur Befüllung wurde bspw. ein Opferkörper 1 mit einem Durchmesser 100 mm und einer Dicke von Dicke 15 mm in eine Druckgußform gegeben und mit Al, dessen Temperatur um seinen Schmelzpunkt, insbesondere zwischen 600 und 900 °C betrug, infiltriert. Die Infiltrationszeit betrug 40 ms bei einem Druck von 800 bar. Als Schmelze dienten 99,9%-reines Aluminium und/oder eine Al-Legierung, insbesondere Al/Sil2.

Anschließend wurde der befüllte Opferkörper 1 unter Vakuum auf eine Temperatur über 1000 °C aufgeheizt. Das Aluminium schmilzt auf, wobei oberhalb der Reaktionstemperatur Al und $Ti_2O_3$ miteinander reagieren. Diese Reaktion gehorcht je nach Zusammensetzung in etwa folgender Gleichung:

$$4\,Al + Ti_2O_3 \rightarrow 2\,AlTi + Al_2O_3.$$

Während dieser Reaktion bleiben die keramischen Bestandteile $TiB_2$ und TiC, die im fertigen Keramik-Metall-Verbundwerkstoff die funktionellen Gruppen darstellen, inert. Das Al und das $Ti_2O_3$ reagieren so, daß schließlich ein zumindest weitgehend dichter Formkörper vorliegt.

Als weiteres exemplarisches Beispiel wird die Reaktion zwischen Aluminium und Titanoxid bei Anwesenheit von elementarem Kohlenstoff bspw. in Form von Kohlenstaub oder Graphit beschrieben, die im Gesamten wie folgt aussieht:

$$2\,C + 3\,TiO_2 + 5\,Al \rightarrow 2\,Al_2O_3 + 2\,TiC + TiAl$$

Auch hier wird das Aluminium mit dem Ti umgesetzt. Ähnlich verhält es sich mit den auftretenden keramischen Bestandteilen, auch hier wird eine niederwertige Substanz in eine höherwertige Substanz umgewandelt.

Für eine gute Übersicht ist nachfolgend eine schematische Darstellung hiervon dargestellt.

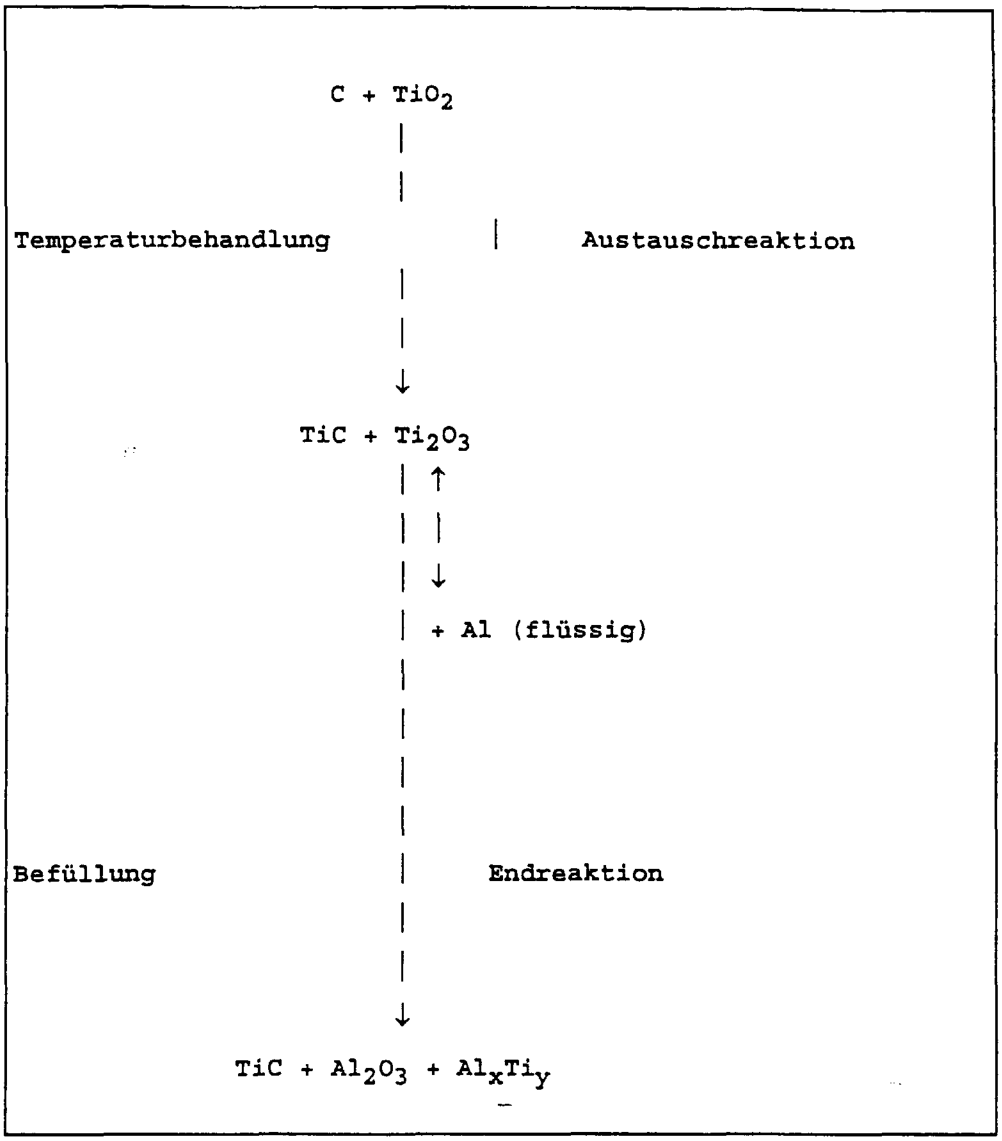


a) Austauschreaktion:

Im ersten Reaktionsschritt handelt es sich um das oben beschriebene Glühen des Gemenges bzw. des Grünkörpers, wobei in diesem Beispiel nur auf das Glühen des Gemenges eingegangen wird. Das Gemenge, das aus einer stöchiometrischen Mischung von C, Ti und $TiO_2$ besteht, wird einer Temperaturbehandlung unterzogen, bei der im wesentlichen, folgende Reaktion stattfindet:

$$C + 2\ Ti + 3\ TiO_2 \rightarrow TiC + 2\ Ti_2O_3$$

Als Reaktionsprodukte liegen also $Ti_2O_3$ und TiC vor, aus denen der Opferkörper gepreßt wird. Bei der Pressung wird der Opferkörper 1 hinsichtlich des späteren Halbzeuges aus dem Keramik-Metall-Verbundwerkstoff endformnah hergestellt.

Auch in diesem Prozeßschritt ist es möglich, die Zusammensetzung und Eigenschaften des späteren Composites zu manipulieren.

Auf die Endreaktion wird nicht eingegangen, da sie analog zum vorherigen Beispiel verläuft.

Beispiele:

Beispiel 1:

Eine Pulvermischung mit der stöchiometrischen Zusammensetzung $B_4C/3\ Ti/2\ TiO_2$ wird mit einem Binder (Polypropylencarbonat) versetzt und uniaxial zu einer runden Scheibe verpreßt. Diese Scheibe wird anschließend in einem graphitbeheizten Kaltwandreaktor unter Vakuum zwischen 1200 °C und 1400 °C für 30 min geglüht. Der hierdurch entstehende keramische Opferkörper 1 hat die stöchiometrische Zusammensetzung $2\ TiB_2/TiC/Ti_2O_3$ und weist eine Porosität von 55% auf. Der Opferkörper 1 wird in einem Druckgußwerkzeug lagedefiniert und relativ zur Druckgußform ortsfest angeordnet und das Druckgußwerkzeug geschlossen. In die Druckgußform des geschlossenen Druckgußwerkzeugs wird Al eingepreßt, wodurch der Opferkörpers 1 und die Zwischenbereiche 2 befüllt werden. Der befüllte Opferkörper 1 wird anschließend zumindest bereichsweise induktiv auf ca. 1100°C ebenfalls unter Vakuum für 1,5 h erhitzt. Bei der Erhitzung werden die aus Aluminium gebildeten Zwischenelemente 3 gekühlt. Der resultierende Keramik-Metall- Verbundwerkstoff besteht aus ca. 20 Vol.-% $TiB_2$ 10 % TiC, 15 % $Al_2O_3$, 45 % $Al_3Ti$ und 10 % Al.

In den weiteren Beispielen wird nur noch auf den Opferkörper 1 bzw. auf den Keramik-Metall-Verbundwerkstoff eingegangen, da die sonstigen Abläufe in einfacher Weise übertragbar und vergleichbar sind.

Beispiel 2:

Eine Pulvermischung mit der stöchiometrischen Zusammensetzung $2\ TiB_2/TiC/2\ TiO_2$ wird unter denselben Bedingungen wie in Beispiel 1 verarbeitet und geglüht. Der keramische Opferkörper 1 hat ebenfalls die Zusammensetzung wie in Beispiel 1, besitzt aber eine Porosität von 45%. Nach der Reaktion mit dem zuvor eingefüllten Aluminium hat der Keramik-Metall-Verbundwerkstoff einen metallischen Anteil von ca. 52 % $Al_3Ti$ und 3 % Al, wobei die keramischen Bestandteile wie in Beispiel 1 bestehen bleiben.

Beispiel 3:

Eine Pulvermischung aus $TiO_2/C$ wird unter geringem $N_2$-Partialdruck (< 1 mbar) bei 1800 °C geglüht, wobei ein Pulver der Verbindung TiCxNy entsteht (x,y je nach $N_2$-Partialdruck). Das Pulver wird mit $TiO_2$ im Verhältnis 3:2 gemischt und wie in Beispiel 1 verarbeitet. Der resultierende Keramik-Metall-Verbundwerkstoff weist in der keramischen Phase nur $TiC_xN_y$ und Al auf, die metallische Phase ist mit der in Beispiel 1 identisch.

Motivation für diese Erfindung war die Entwicklung neuer Bremsenscheiben. Die Eigenschaften die die Bremsscheibe im Bereich ihrer Reibflächen 7 aufweist, prädestinieren die Erfindung für übertragbare Anwendungen auf allen Gebieten, wo hohe Temperaturen und hoher Verschleiß auftreten.

Derartige Anwendungen sind insbesondere tribologische Systeme und hierbei bevorzugt Strukturkomponenten in Strahltriebwerken und Motoren, insbesondere Gleitlager, Schneidwerkstoffe und besonders bevorzugt Bremsscheiben.

Ferner ist eine Anwendung als Kompositmaterial für insbesondere schußsichere Panzerungen zweckmäßige.

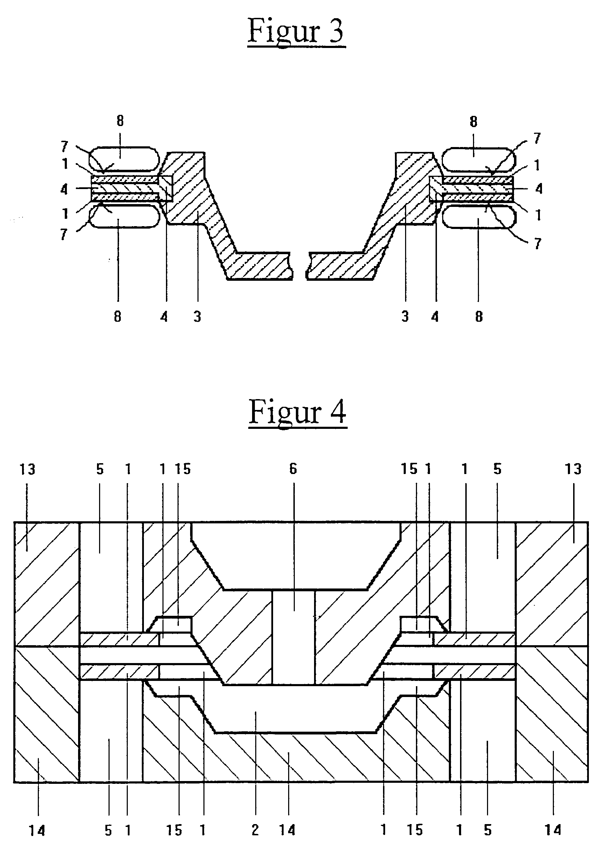

In Figur 1 ist ein Preßwerkzeug für einen Opferkörper 1 mit eingebrachtem Pulver dargestellt. Das Preßwerkzeug weist ein Ober-9 und ein Unterwerkzeug 10 auf. Zum Pressen des Opferkörpers 1 oder im anderen Falle des Grünkörpers wird das entsprechende Pulver 11 in die Preßform eingebracht und das Ober- 9 und das Unterverkzeug 11 des Preßwerkzeugs relativ aufeinander zu bewegt, bis die Endlage 12, die durch die punktierte Linie dargestellt ist, erreicht und der Opfer- 1 bzw. Grünkörper gepreßt ist. Der gepreßte Körper wird aus dem Preßwerkzeug entnommen und in eine Druckgußform eines Druckgußwerkzeuges, wie es beispielhaft in den Figuren 2 und 4 dargestellt ist, eingelegt.

Das zum Druckgießen von Bremsscheiben vorgesehene Druckgußwerkzeug gemäß der Figur 2 weist ein oberes Formteil 13 und ein unter Formteil 14 auf. Der Opferkörper 1 wird in die Druckgußform eingelegt und füllt diese teilweise aus. Das obere Formteil 13 und auch das untere Formteil 14 weisen mehrere im Bereich des Opferkörpers 1 angeordnete Materialzuführungskanäle 5 auf, so daß der poröse Opferkörper 1 schnell mit dem befüllenden Metall befüllt werden kann.

Da das Gießen des Topfes (Zwischenelement 3) der Bremsscheibe gegenüber dem Befüllen des Opferkörpers 1 einfacher realisierbar ist, ist der entsprechende Gußkanal 6 für diesen Topf ausschließlich im oberen Formwerkzeug 13 angeordnet.

Für eine gute gießtechnische Verbindung des Reibringes und des Topfes der Bremsscheibe weist die Druckgußform im Übergangsbereich zwischen dem Opferkörper 1 und dem späteren Topf zumindest bereichsweise eine Verdikkung 15 auf, so daß der gegossene Topf im Übergangsbereich den ringförmigen Opferkörper 1 innenseitig C-förmig umfaßt und an beiden Axialflächen des befüllten Opferkörpers 1, die bereichsweise später die Reibflächen 7 bilden, direkt und monolithisch anliegt.

In Figur 3 ist die gegossene Bremsscheibe mit befülltem Opferkörper d1 dargestellt. An den beiden Axialflächen des befüllten Opferkörpers 1, also im Bereich der späteren Reibflächen 7 sind Induktoren 8 angeordnet, die den befüllten Opferkörper 1 entlang der beiden Axialflächen erwärmen. Die Erwärmung erfolgt auf oder über die Reaktionstemperatur, wobei auf beiden Axialflächen allerdings nur jeweils etwa ein Drittel der Dicke des Opferkörpers 1 auf die Reaktionstemperatur erwärmt wird. Dadurch wird beidseitig aber auch nur etwa ein Drittel der Schichtdicke des befüllten Opferkörpers 1 in den Keramik-Metall-Verbundwerkstoff reagiert, so daß ein Kern 4 aus unreagiertem Material verbleibt.

In Figur 4 ist ein weiteres Druckgußwerkzeug dargestellt. Im Gegensatz zu dem Druckgußwerkzeug gemäß Figur 2 sind in der Druckgußform dieses Druckgußwerkzeuges zwei Opferkörper 1 eingelegt. Die Opferkörper 1 sind bei geschlossenem Druckgußwerkzeug parallel zueinander ausgerichtet und voneinander beabstandet. Dadurch kann der Zwischenraum zwischen den zwei ringförmigen Opferkörpern 1 in einer einen Kern 4 bildenden Weise bspw. mit dem Material ausgegossen werden, mit dem auch der Topf, also das Zwischenelement hergestellt wird.

**Patentansprüche**

**1.** Verfahren zur Herstellung Bauteils, welches Bauteil bereichsweise aus einem Keramik-Metall-Verbundwerkstoff hergestellt ist, bei welchem Verfahren

- aus keramischen Vorprodukten ein poröser Opferkörper hergestellt wird,
- der Opferkörper mit erweichtem mit erweichtem Metall und/oder einer metallischen Legierung - im folgenden vereinfachend befüllendes Metall (BMe) genannt - bei einer vorgebbaren und bei oder oberhalb der Erweichungstemperatur des Metalls liegenden Befüllungstemparatur und unter erhöhtem Druck, befüllt wird,
- der mit dem Metall (BMe) befüllte Opferkörper auf eine gegenüber der Befüllungstemparatur höhere Reaktionstemperatur oder darüber erhitzt wird,
- bei bzw. oberhalb der Reaktionstemperatur zwischen dem befüllenden Metall (BMe) und dem Metall der Keramik des Opferkörpers (KMe) eine Reaktion durchgeführt wird,

    - bei welcher Reaktion der Keramik-Metall-Verbundwerkstoff mit einer keramischen und einer metallischen Phase gebildet wird,
    - wobei die keramische Phase $KMe_mB_x$ und/oder $KMe_nC_y$ und/oder $KMe_oCN$ und $BMe_pO_3$ aufweist und
    - wobei die metallische Phase eine intermetallische Verbindung aus einem Metall der Keramik (KMe) und einem befüllenden Metall (BMe) aufweist.

**dadurch gekennzeichnet,**
- daß der Opferkörper (1) in ein Druckgußwerkzeug lagedefiniert und bezüglich des Druckgußwerkzeugs ortsfest sowie die Druckgußform bis auf vom Opferkörper (1) freie Zwischenbereiche (2) ausfüllend eingelegt wird,
- daß bei dem Druckguß des Bauteils der Opferkörper (1) mit dem befüllenden Metall (BMe) befüllt wird, und
- daß mit dem Druckgußwerkzeug eine zumindest endnahe Form des Bauteils, bestehend aus befülltem Opferkörper (1) und dem/den vom Opferkörper freien Zwischenelemente(n) (3) - gegossen wird,
- daß das fertig gegossene Bauteil im Bereich des befüllten Opferkörpers (1) auf oder über Reaktionstemperatur erhitzt wird.

**2.** Verfahren nach Anspruch 1,
**dadurch gekennzeichnet,**
daß das gegossene Bauteil ausschließlich im Bereich des befüllten Opferkörpers (1) auf oder über Reaktionstemperatur erhitzt wird.

**3.** Verfahren nach Anspruch 1,
**dadurch gekennzeichnet,**
daß die Zwischenelemente (3) zumindest teilweise mit dem befüllenden Metall hergestellt gegossen werden.

**4.** Verfahren nach Anspruch 1,
**dadurch gekennzeichnet,**
daß der Opferkörper (1) bei der Reaktion zwischen dem Metall der Keramik und dem befüllenden Metall nur teilweise zu dem Keramik-Metall-Verbundwerkstoff reagiert wird.

**5.** Verfahren nach Anspruch 1,
**dadurch gekennzeichnet,**
daß der Opferkörper (1) bei der Reaktion zwischen dem Metall der Keramik und dem befüllenden Metall nur teilweise zu dem Keramik-Metall-Verbundwerkstoff reagiert wird und daß im Innern des Opferkörpers (1) das unreagierte Material des Opferkörpers als Kern (4) erhalten wird.

**6.** Verfahren nach Anspruch 1,
**dadurch gekennzeichnet,**
daß die Oberfläche des gegossenen Bauteils im Bereich des Opferkörpers (1) gerieben und dadurch auf Reaktionstemperatur oder darüber erhitzt wird.

**7.** Verfahren nach Anspruch 1,
**dadurch gekennzeichnet,**
daß das Bauteil im Bereich des Opferkörper (1) induktiv und/oder kapazitiv auf Reaktionstemperatur oder darüber erwärmt wird.

**8.** Verfahren nach Anspruch 1,
**dadurch gekennzeichnet,**
daß als Bauteil ein von Reibung beanspruchtes Bauteil gegossen wird, wobei der Opferkörper (1) in der Druckgußform im Bereich der zu erwartenden Reibung angeordnet wird.

**9.** Verfahren nach Anspruch 1,
**dadurch gekennzeichnet,**
daß als Bauteil eine Bremsscheibe eines Kraftfahrzeugs gegossen wird, wobei der Opferkörper (1) in der Druckgußform im Bereich des Reibrings der Bremsscheibe angeordnet wird und später den Reibring der Bremsscheibe bildet.

**10.** Verfahren nach Anspruch 1,
**dadurch gekennzeichnet,**
daß der Opferkörper (1) entsprechend seiner späteren Form im Bauteil hergestellt, insbesondere gepreßt wird.

**11.** Verfahren nach Anspruch 1,
**dadurch gekennzeichnet,**
daß der zwar befüllte aber noch nicht auf oder über Reaktionstemperatur erhitzte Opferkörper (1) auf seine Endform bearbeitet wird.

**12.** Verfahren nach Anspruch 1,
**dadurch gekennzeichnet,**
daß das Bauteile im Bereich des Opferkörpers (1) parallel zu seiner Außenfläche und/oder in Richtung seiner Schichtdicke unterschiedlich erwärmt wird, so daß der Opferkörper (1) hinsichtlich des Keramik-Metall-Verbundwerkstoffes einen Gradienten aufweist.

**13.** Bauteil aufweisend einen Keramik-Metall-Verbundwerkstoff mit einer keramischen Phase und einer metallischen Phase, welche keramische Phase $Al_2O_3$ und mindestens eine Verbindung aus der Gruppe der Reaktionsprodukte $TiB_x$, $TiC_y$ und TiCN aufweist und welche metallische Phase eine intermetallische Verbindung aus Al und Ti aufweist,
**dadurch gekennzeichnet,**

- daß das Bauteil neben dem Keramik-Metall-Verbundwerkstoff Zwischenelemente (3) aufweist,
- daß die Zwischenelemente (3) einen direkten und haftenden, insbesondere monolithischen Kontakt zu dem Keramik-Metall-Verbundwerkstoff aufweisen,
- daß die Zwischenelemente (3) gegenüber dem Keramik-Metall-Verbundwerkstoff eine andere Materialzusammensetzung aufweisen und
- daß die Zwischenelemente (3) als Druckgußteile ausgebildet sind.

**14.** Bauteil nach Anspruch 13,
**dadurch gekennzeichnet,**
daß im Bereich des Keramik-Metall-Verbundwerkstoffs einen Kern (4) aufweist, der aus dem Vorgängermaterial des Keramik-Metall-Verbundwerkstoffs gebildet ist.

**15.** Bauteil nach Anspruch 13,
**dadurch gekennzeichnet,**

daß das Bauteil entlang zumindest einer Raumrichtung die Phasenzusammensetzung einen sich ändernden Gradienten aufweist; d.h. der Anteils an Keramik-Metall-Verbundwerkstoff entlang dieser Raumrichtung ändert sich.

**16.** Bauteil nach Anspruch 13,
**dadurch gekennzeichnet,**
daß das Bauteil ein von Reibung beanspruchtes Bauteil ist und daß der Keramik-Metall-Verbundwerkstoff im Bereich der zu erwartenden Reibflächen dieses Bauteils angeordnet ist.

**17.** Bauteil nach Anspruch 13,
**dadurch gekennzeichnet,**
daß das Bauteil eine Strukturkomponente in Strahltriebwerken und Motoren, insbesondere ein Gleitlager oder ein Schneidwerkzeug oder eine insbesondere schußsichere Panzerung ist.

**18.** Bauteil nach Anspruch 13,
**dadurch gekennzeichnet,**
daß das Bauteil eine Bremsscheibe für Kraftfahrzeuge ist, daß der Keramik-Metall-Verbundwerkstoff im Bereich der Reibflächen angeordnet ist und daß das Zwischenelement (3) der Topf der Bremsscheibe ist.

**19.** Bauteil nach Anspruch 13,
**dadurch gekennzeichnet,**
daß der Keramik-Metall-Verbundwerkstoff Fasern, insbesondere Kurzfasern und/oder Filz und/oder Gewebe - im folgenden zusammenfassend Fasern genannt - aufweist.

**20.** Bauteil nach Anspruch 19,
**dadurch gekennzeichnet,**
daß die Fasern auf der Basis von $Al_2O_3$ und/oder SiC und/oder Metall, insbesondere Stahl, und/oder Mineralien hergestellt sind.

Figur 1

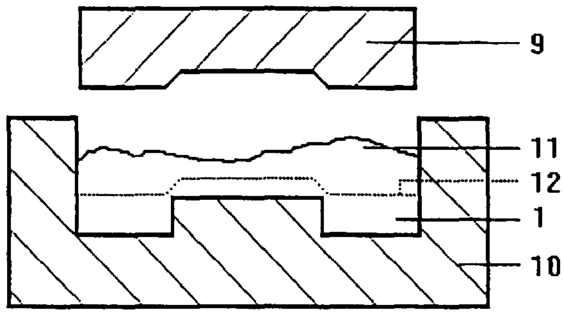


Figur 2

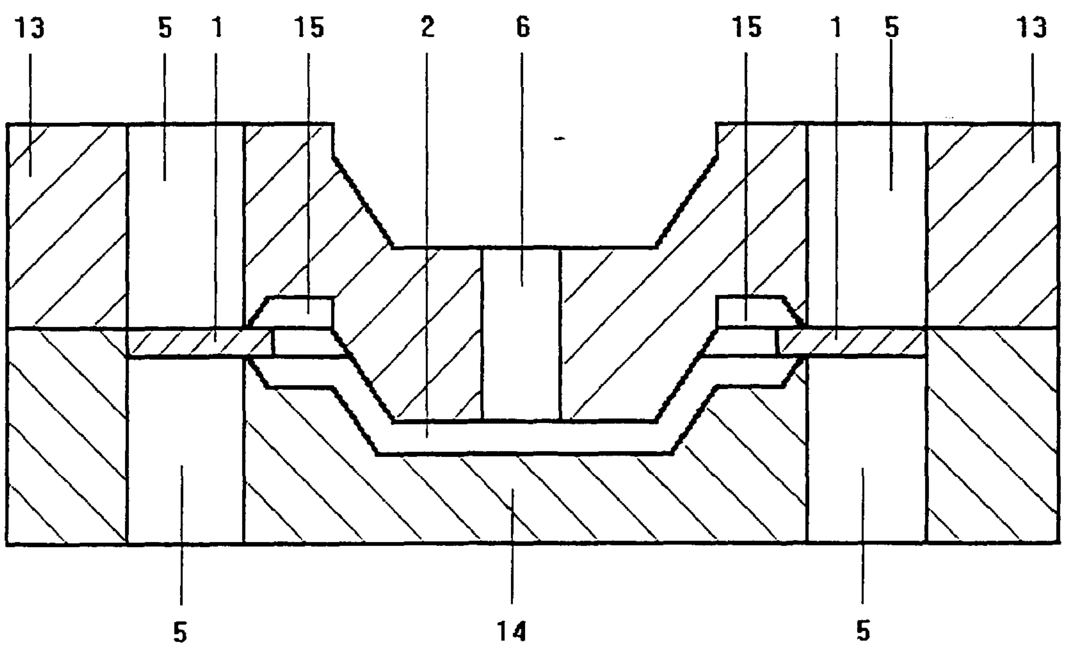

Figur 3

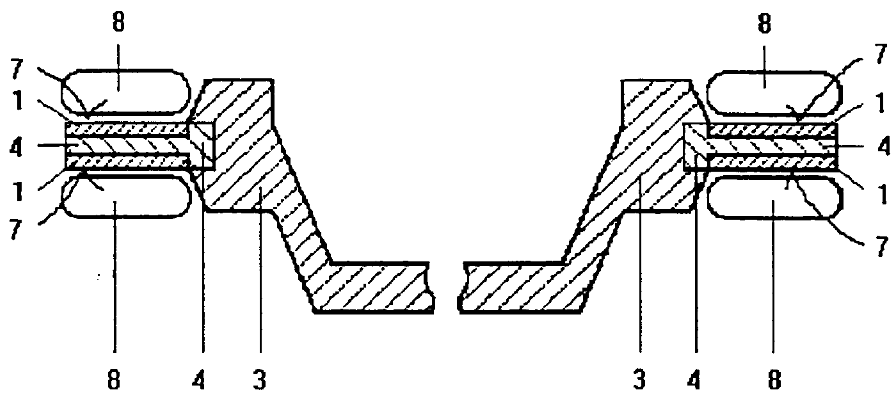


Figur 4